(19) Europäisches Patentamt
European Patent Office
Office européen des brevets

(11) **EP 3 056 257 A1**

(12) **EUROPÄISCHE PATENTANMELDUNG**

(43) Veröffentlichungstag:
**17.08.2016   Patentblatt 2016/33**

(21) Anmeldenummer: **15003317.3**

(22) Anmeldetag: **21.11.2015**

(51) Int Cl.:
*B01D 61/02* (2006.01)          *B01D 61/14* (2006.01)
*B01D 61/12* (2006.01)          *C02F 1/44* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **25.11.2014   DE 102014017404**

(71) Anmelder: **Fidica GmbH & Co. KG**
**63877 Sailauf (DE)**

(72) Erfinder: **Völker, Manfred**
**63825 Blankenbach (DE)**

(74) Vertreter: **Flosdorff, Jürgen**
**Huss, Flosdorff & Partner GbR**
**Klarweinstraße 39**
**82467 Garmisch-Partenkirchen (DE)**

(54) **ÜBERWACHUNG RO-ANLAGE FÜR SPÜLLÖSUNGEN**

(57) Das Verfahren zur Verifizierung einer RO-Membran einer RO-Anlage, ist dadurch gekennzeichnet, dass die Leitfähigkeitswerte des zugeführten Rohwassers und des Permeats sowie die Menge des Rohwasser-Zuflusses und des Konzentrat-Abflusses kontinuierlich oder zyklisch gemessen werden und dass aus den Messwerten der Wirkungsgrad der RO-Membran und deren Rückhalterate und/oder Filtrationseffizienz errechnet werden.

EP 3 056 257 A1

**Beschreibung**

Ziel dieser Entwicklung ist es aus (vorbehandeltem) Leitungswasser durch den Einsatz von Filtertechnik eine kostengünstige, chemisch und mikrobiologisch hochreine Flüssigkeit als Grundstoff für den Einsatz medizinischer Spüllösungen dezentral vor Ort herzustellen, um wirtschaftliche und anwendungstechnische Vorteile zu erzielen.
Dabei soll eine verifizierbare Flüssigkeitsqualität erzielt- und die für die Reinigungsmaßnahmen erforderlichen Aufwendungen und giftigen Stoffe eingeschränkt werden. Eine umweltfreundliche Technologie und eine intelligente Auswertung der Daten sollen die Lebensdauer der eingesetzten Komponenten verbessern bzw. deren Verschleiß rechtzeitig erkennen.

Anwendungen dieser Entwicklung für andere Bereiche wie z.B. Flüssigkeitsaufbereitung für Labor- oder Biologie- Pharmazie als hochreines Spülmittel oder auch Ansatzmedium zur Herstellung von Medikamenten, Zellkulturen und dergleichen ist vorstellbar und praktikabel.

Medizinische Spüllösungen werden in der Regel aus destilliertem Wasser als Grundstoff, der zentral hergestellt wird, in einem zentralen Produktionsprozess zu Spüllösungen weiterverarbeitet.

Die regulativen und normativen Anforderungen an die Qualität des Grundstoffes Wassers sind dabei so hoch, dass es bisher nicht möglich ist, vor Ort z.B. im Krankenhaus, verifizierbare Spüllösungen auf Bedarf herzustellen.

Zum einen sind dies die hohen mikrobiologischen- und zum anderen die erforderlichen chemischen Anforderungen an den Grundstoff Wasser die einer verifizier- und nachweisbaren, normativ geforderte Qualität der vor Ort, bedarfsgesteuerten Herstellung entgegenstehen.

Es stehen zwar Laborwassergeräte auf Basis von Umkehrosmosen zur Erzeugung von Flüssigkeit mit hoher chemischer - und mikrobiologischer Reinheit zur Verfügung, aber als Nachteil ist die fehlende Prävention zur Keimreduzierung und ein nicht verifizierbarer Test der beteiligten Filterstufen zu werten.

Eine weitere bedeutende Forderung bei der on Line Herstellung einer Spüllösung ist die erforderliche hohe Verfügbarkeit der Geräte.

Eine schwierig zu lösende Aufgabe ist die rasante mikrobiologische Besiedelung innerhalb der Filterstufen bzw. der Wasseraufbereitung dauerhaft zu minimieren bzw. präventiv zu reduzieren. Minimierung und Prävention sind erforderlich, weil die Filterstufen nur eine gewisse Keimrückhaltung von der Primär- zur Sekundärseite aufweisen. Konsequenterweise sind deshalb häufig Wasserproben zu entnehmen und teure Mikrobiologische Tests als quasi Revalidierung durchzuführen.

Auch ist die für die Rückhaltung der chemischen Bestandteile vorzugsweise als Umkehrosmose Membrane eingesetzte Filterstufe, hinsichtlich möglicher Kleinst-Rupturen nur schwer zu diagnostizieren.
Eine Leitfähigkeitsmessung als alleinige Verifizierung einer Osmose Membran -wie sie als Stand der Technik eingesetzt wird - ist nicht ausreichend.

Üblicherweise werden Keimreduktionen in wasserführenden Systemen physikalisch und oder auch chemisch durchgeführt. Großer Aufwand fällt aus Gründen der Toxizität, der Nachweiskontrolle nach einer chemischen Desinfektion zu, weil geringste Restkonzentrationen zu schwerwiegenden Patientenschäden führen können.
Außerdem werden durch den Einsatz von Chemikalien bzw. Bioziden die Abwässer kontaminiert.

Thermische Desinfektionen reichen häufig nicht zur vollständigen Keimreduktion aus, auch ist der Material Stress bzw. das vorzeitige Altern der eingesetzten Komponenten nicht zu vernachlässigen. Der grundsätzliche Nachteil einer thermischen Desinfektion liegt jedoch in der geringen Reinigungswirkung z.B. der Primärseite einer Umkehrosmosemembrane. Es hat sich herausgestellt, dass je nach Art der vorhandenen Verunreinigungen auch eine Verdichtung bzw. Verkrustung eines vorhandenen Belages Resultat einer therm. Desinfektion sein können.

Idealerweise sollte eine Kombination thermisch und chemisch gewählt werden, um sowohl eine reinigungs- als auch desinfizierende Wirkung zu erzielen.
Aufgrund der daraus resultierenden höheren Wirksamkeit wäre eine niedrigere Temperatur erforderlich und die Konzentration des chemischen Mittels könnte niedriger sein. Die Praxis zeigt aber erhebliche Schwierigkeiten hinsichtlich des transmembranen Flusses einer chemo-thermischen Reinigungslösung von der Primär- auf die Sekundär Seite der Umkehrosmose Membran auf, weil der hohe osmostische Druck dem transmembranen Druck entgegensteht.

Basis für einwandfreie Wasserqualität sind auch eine hohe Verfügbarkeit, als auch eine zuverlässige, überwachbare chemische und Mikrobiologische Rückhalterate der beteiligten Filterstufen.
Als Stand der Technik wird z.B. bei Umkehrosmosemembranen eine Leitfähigkeitsmessung durchgeführt, deren Aussagekraft hinsichtlich der Membran Qualität als nicht ausreichend beurteilt werden kann.

Wegen der vorgenannten Schwierigkeiten, werden in der Praxis deshalb häufig Filter mit geringeren Standzeiten eingesetzt, die nach kurzzeitigem Gebrauch auszutauschen sind.

Notwendige Verbesserungen, Zweck und Ziel der Erfindung sind deshalb
eine kostengünstige on Line Produktion von Reinstwasser für medizinische Spüllösungen auf Basis einer Umkehrosmose mit niedrigster, normativ zulässiger, mikrobiologischer und chemischer Kontamination, ohne weitere Kontrollen am Anwendungsort.

Dabei soll die erforderliche hohe Verfügbarkeit der Geräte bei allen Mess- und Überwachungsaufgaben hinsichtlich ihrer Eigensicherheit nur eine entfernte Ausfallwahrscheinlichkeit aufzeigen, um unter allen Umständen eine katastrophale Auswirkung für den Patienten zu vermeiden, bzw. die Qualität oder auch Toxizität der erzeugten Flüssigkeit einwandfrei in den zugesicherten Akzeptanzkriterien zu überwachen.

Diese Aufgabe wird erfindungsgemäß, wirkungsvoll dadurch gelöst, dass zur Herstellung des Reinstwassers die Kombination einer Umkehrosmose Membrane und mindestens einer weiteren, folgenden Filterstufen, beispielsweise eines Ultra- oder Sterilfilters, bevorzugt als Kapillarmembran, genutzt wird.

Die Reinigung des Systems bzw. Keimprävention und Reduktion wird durch die Kombination aus einem gering toxischen, auf Zitrat basierenden Desinfektions- u. Reinigungsmittel mit einer Wassererwärmung eingesetzt. Wobei sowohl die Primär-, als auch die Sekundärseite der Umkehrosmose getrennt voneinander mittels einer zusätzlichen Pumpe auch ohne transmembranen Fluss zu desinfizieren bzw. zu reinigen sind.

Mit großem Vorteil erfolgt dabei die Zuführung der Desinfektions-, Reinigungslösung ohne Zutun des Anwenders auf der Sekundärseite der Membrane und kann von dort, nach Bedarf auch in den Primärkreis verteilt werden. Damit eine nicht gewollte, unbeabsichtigte Zuführung von Desinfektions-/Reinigungsmittel unterbunden wird erhält die Desinfektionsvorrichtung in der Ansaugstrecke eine niveauüberwachte, zwangsbelüftete Glaskammer die eine zuverlässige Medientrennung zulässt und gleichzeitig als Leererkennung für den Desinfektions-/Reinigungsmittelvorrat nutzbar ist.

Zur Vermeidung von Totzonen und Rückständen von Reinigungsmitteln ist die Membran totzonenfrei in das Umkehrosmosemodul eingesetzt und der Vorlaufbehälter wird an seiner Innenwandfläche vollständig ringförmig gespült.

Eine Überprüfung und Sicherstellung auf Desinfektionsmittelfreiheit erfolgt durch zwei sich gegenseitig verifizierende Leitfähigkeitsmessungen durch deren Freigabe Signal ein Permeatfreigabeventil geschaltet werden kann.

Die Verifizierung der Umkehrosmose Membrane erfolgt mit Vorteil im Wesentlichen durch eine kontinuierliche Messung und Trendanalyse von Rückhalterate und Ausbeute d.h. der Verhältnisse von Leitfähigkeitswerten der Primär- zur Sekundär Seite der Membrane, sowie des Verhältnisses des eingesetzten Rohwasser- zu Permeatvolumen. Ebenso wird ein Standardisierter Permeatfluss ermittelt.

Wobei der Trend der ermittelten Daten mit einstellbaren Grenzwerten, mittels unterschiedlicher unabhängiger Rechner, überwacht und dargestellt werden kann.

Mit Vorteil werden aus diesen Informationen Prognosen zu Serviceeinsätzen bzw. anderen Qualitäts- und Lebensdauererhaltenden Maßnahmen abgeleitet.

Aus Abweichung kann auch eine Informations-, Warn- oder Alarmmeldung generiert und ausgegeben werden, die den Betreiber auf die sich verschlechternde Membranqualität hinweist.

Zur besseren Übersicht sind in der nachfolgenden Tabelle alle Prozessdaten zur Trenddatenerfassung und Überwachung dargestellt.

Damit ist ein Einhalten normativer Vorgaben möglich, ebenso das Überwachen der Leistungsparameter der Osmosemembrane.

Insgesamt werden nachfolgend dargestellte Prozessdaten erhoben.

| **Prozessdaten** |
| --- |
| Maximaler Rohwasserzufluss |
| Permeatverbrauch |
| Rohwasserverbrauch |
| Zuflusstemperatur |
| Permeattemperatur |
| Rohwasserleitfähigkeit |
| **Permeatleitfähigkeit** |
| **Ausbeute** |
| **Rückhalterate** |
| **Standard Permeatfluss** |
| **Druckhaltest Ultrafilter/ Sterilfilter F1** |
| Druckhaltest Ultrafilter/ Sterilfilter F2 |
| Desinfektionsnachweis |

(fortgesetzt)

| Chlorgehalt im Rohwasser |
|---|
| Wasserhärte |
| Ggf. Permeat und oder Konzentratdruck |

Elektronik und Software sind dabei als Betriebs- u. Schutzrechnersystem ausgeführt, deren Signale sicherheitsrelevante Daten miteinander kommunizieren, vergleichen und dadurch einen Ausfall mit Gefährdungspotential verhindern.

Prinzipiell werden dabei alle prozessrelevanten Daten sowohl vom Betriebs- als auch vom Schutzrechner erfasst und ggf. berechnet. Die Messergebnisse werden vom Betriebs- zum Schutzrechner und umgekehrt gesendet. Jeder Rechner vergleicht dabei die Messergebnisse mit den eigenen und gibt eine Bestätigung zurück.

Die Daten werden nach der Bestätigung von Betriebs und Schutzrechner zusammen mit einer Prüfsumme in den Trenddatenspeicher geschrieben der vorzugsweise als Eprom, aber auch als anderes Speichermedium, ausgebildet sein kann.

Im Einzelnen sind zur Beurteilung und Verifizierung der Umkehrosmosemembrane folgende Daten wichtig:

**Wirkungsgrad Überwachung (Ausbeute):**

Der Wirkungsgrad der Umkehrosmose Membran wird berechnet aus dem Verhältnis der Menge des Permeats zur Menge des zugeführten Rohwassers.

$$\eta = \frac{Q_{Rohwasser} - Q_{Konzentrat}}{Q_{Rohwasser}}$$

$\eta$ = Wirkungsgrad in %
$Q_{Rohwasser}$ = Menge des Rohwassers in L/min
$Q_{Konzentrat}$ = Menge des Wassers, das die chemischen Inhaltstoffe in erhöhter Konzentration enthält.

Durch die Kontrolle des Wirkungsgrades ist insbesondere eine Überwachung der Konzentration von schwerlöslichen Salzen wie z.B. Kalium- und Magnesiumsalze auf der Primärseiteseite der Membran- möglich. Ein überhöhter Wirkungsgrad bedeutet, dass weniger chemische Wasserinhaltsstoffe zurückgehalten werden und oder eine Verblockung der Membranen entstehen kann.

Zur exakten Bestimmung sind 2 Flussmessern (FL-Rohwasser und FL-Konzentrat) erforderlich, wobei einer davon (FL-RW) regelmäßig volumetrisch verifiziert wird und danach die relative Übereinstimmung der beiden Flussmesser überprüft und durch unterschiedliche Rechner überwacht werden.

Damit eine exakte volumetrische Überprüfung des FL-Rohwasser möglich ist, werden die in den Vorlaufbehälter zugeführten Flüssigkeiten strömungsberuhigt über einen Ringspalt eingeleitet.

**Überwachung der Rückhalterate:**

Die durchschnittliche Rückhalterate kann beispielsweise berechnet werden aus dem Verhältnis der Permeatleitfähigkeit zur zugeführten Leitfähigkeit beispielsweise des Rohwasser oder auch ganz generell der gemittelten Leitfähigkeit der Flüssigkeit auf der Primärseite der Membrane.

$$R = 1 - \frac{2 * LF_{Permeat}}{LF_{Rohwasser} * \left(\frac{1}{1-\eta} + 1\right)}$$

R = aktuelle Rückhalterate Wert in %
$LF_{Permeat}$ = Leitfähigkeit des Permeates in uS/cm
$LF_{Rohwasser}$ = Leitfähigkeit des Rohwassers in uS/cm
$\eta$ = Wirkungsgrad (Ausbeute) in %

•Einheit: Dimensionslos bzw. %

Mittels der Rückhalterate kann die Filtrationseffizienz sowie die Konzentration auf der Primärseite der eingesetzten Umkehrosmosemembrane beurteilt werden.

Dabei werden die aktuelle Leitfähigkeit des Rohwassers und des Permeates zyklisch gemessen und daraus die aktuelle Rückhalterate berechnet. Aus n=Werten wird der Rückhalterate Mittelwert berechnet und gespeichert. Ein Rückhaltetrend wird kontinuierlich beobachtet. Bei einem Rückgang der Rückhalterate beispielsweise von mehr als 10% kann eine Maßnahme empfohlen und oder auch automatisch eingeleitet werden. Z.B. eine Membranreinigung, evtl. Austausch der Membrane und oder auch eine chemische Analyse des Permeates.

**Permeatleitfähigkeit:**

Die Messergebnisse der Permeatleitfähigkeit werden bereits zur Ermittlung der Rückhaltrate benötigt. In Praxis wird dieser Messwert als alleiniges Qualitätsmerkmal zur Beurteilung der Umkehrosmose Membrane herangezogen.

Zur Erstfehlersicheren Bestimmung können 3 Leitfähigkeitsmesseinrichtungen eingesetzt werden. Einmal einen Leitfähigkeitsmesser in Rohwasserbereich bzw. Primärbereich der Membrane und zwei weitere im Permeatbereich, wobei die beiden im Permeatbereich befindlichen Leitfähigkeitsmesseinrichtungen durch unterschiedlichen Rechner auf eine hohe relative Übereinstimmung größer 90% verifiziert werden und die dritte Leitfähigkeitsmesseinrichtung im Rohwasserbereich ebenso auf die relative Übereinstimmung auf Basis der zuvor ermittelten Permeatleitfähigkeit und der Ausbeute mit einem errechneten Erwartungswert überprüft wird.

Da die Leitfähigkeit natürlicher Wässer temperaturabhängig ist wird der angezeigte Wert mit einem Faktor von ca. 2%/°C kompensiert.

**Standardpermeatfluss:**

Zur ergänzenden Verifizierung der Membranintegrität ist eine Standardpermeatfluss Überwachung vorgesehen. Dabei wird die während eines Test Zyklus gemessene Permeatleistung jeweils auf 15°C und einem fixen Transmembrandruck bezogen.

Durch die Überwachung des Standardpermeatflusses kann mit Vorteil der Verlauf des transmembranen Flusses über einen längeren Zeitraum beobachtet werden. Das Auftretens von Ablagerungen (Fouling) auf der Umkehrosmose Membran oder auch andere Faktoren die zur Verschlechterung bzw. Veränderung der Filtrationsleistung führen ist indizierbar.

Durch Verlaufsbeurteilung ist auch eine Reinigung oder auch andere Maßnahme prognostizierbar, wenn der Standard Permeatfluss beispielsweise 10 bis 15% abgesunken ist.

$$Q_{pStd}=(Q_{rw}-Q_c) *( 1+(T_p-15)*0,02)$$

$Q_{pStd}$= Standard Permeatfluss
$Q_{rw}$ = Rohwasserfluss
$Q_c$ = Konzentratfluss
$T_p$= Permeattemperatur
0,02 = Kompensationsfaktor (2%/°C)

Durchführung: Zunächst werden der aktuelle Rohwasserfluss und Konzentratfluss, die Differenz gebildet d.h. die Permeatmenge gemessen und daraus der Standardpermeatfluss bei 15°C berechnet.

Da die Filtrationsleistung der Membrane Temperaturabhängig ist, wurde ein entsprechender Faktor mit 2%/°C eingeführt.

Zur exakten Bestimmung sind 2 Flussmessern (FL-Rohwasser und FL-Konzentrat) erforderlich wobei einer davon der Rohwasserzuflussmesser (FL-RW) regelmäßig volumetrisch verifiziert wird. Darüber hinaus wird die relative Übereinstimmung der beiden Flussmessern überprüft und durch unterschiedlichen Rechnern überwacht.

Zur Darstellung können beispielsweise alle Werte über einen wahlweise festzulegenden Zeitraum, z.B. von 50 Betriebsstunden, dies kann der durchschnittlichen Betriebszeit einer RO-Anlage pro Woche entsprechen, (=Wochenzyklus), gemittelt und protokolliert werden.

Für die Protokollierung selbst wird eine laufende Mittelwertbildung nach folgender Formel durchgeführt:

$$\overline{X}_{n+1} = \frac{n\,\overline{X}_n + X_{n+1}}{n+1}$$

mit $\overline{X}_{n+1}$ = laufender Mittelwert über "n+1"-Werte

$\overline{X}_n$ = laufender Mittelwert über "n"-Werte

$\overline{X}_{n+1}$ = aktueller Messwert

$n$ = Anzahl der bereits berücksichtigten Werte.

Für die Werteermittlung zwischen 2 Messwerten kann beispielsweise ein Zeitintervall von x Sekunden oder auch nur einmal täglich genutzt werden.

Filter und Schutzsystem

Zur Sicherstellung der Mikrobiologischen Qualität des Permeates ist mit Vorteil ein Ultra-, und oder auch Sterilfilter primärseitig im Permeatkreis. Ein weiterer Sterilfilter kann zur Verbesserung der Flüssigkeitsreinheit stromabwärts, unmittelbar an der Entnahmestelle eingesetzt werden

Mit Vorteil können dabei die Primärseiten der Filter überströmt und gereinigt werden.

Die Sicherstellung der Filterintegrität kann durch einen Bubble-Point Test erfolgen. Bubble-Point Test basiert auf der Tatsache, dass die Flüssigkeit in den Poren des Filters durch die Oberflächenspannung und Kapillarkräfte gehalten wird. Der Mindestdruck der dafür erforderlich ist, um Flüssigkeit aus den Poren zu zwingen, ist ein Maß für den Porendurchmesser.

$$\Delta P = \frac{4 * \sigma * cos\theta}{D}$$

$\Delta$P= Druckdifferenz in Bar

$\sigma$ = Oberflächenspannung der Flüssigkeit in N/m (Wasser=72,75mN/m)

$\theta$ = Kontaktwinkel Flüssigkeit-Polyethersulfon: 65 - 70°

D = Porendurchmesser in $\mu$m

Durchführung: Der Druck auf den Filter wird erhöht. Im selben Moment, in dem ein kontinuierlicher Luftblasenaustritt zu erkennen ist, wird der Druck am Manometer abgelesen. Da Oberflächenspannung, Benetzungswinkel und Druckdifferenz bekannt sind, kann durch Umstellen der Gleichung ein maximal zulässiger Durchmesser der Membranpore errechnet und somit eine Qualitätsaussage getroffen werden.

Eine andere bevorzugte Möglichkeit besteht in der Durchführung eines Druckhaltetest.

Eine Undichtigkeit im Filter bzw. der Membrane lässt sich durch den automatisierten Druckhaltetest sicher erkennen. Bei diesem Test wird eine Filterundichtigkeit über einen Druckabfall mittels Drucksensor überwacht. Dieser Druckabfall wird durch transmembrane Gasdiffusion durch die Filtermembrane verursacht.

Der Druckhaltewert ist von der Membran Fläche d.h. vom Filtervolumen, der Gas Diffusionsströmung durch die Membrane und vom Prüfdruck abhängig.

$$\Delta P = \frac{D * t * Pa}{V}$$

$\Delta$P= Druckdifferenz in Bar

D=Gas Diffusionsrate in ml/min

t= Zeit in min

Pa= atmosphärischer Druck (1,013 bar)

V=Filtergehäuse Volumen in ml

Zur Durchführung der Prüfung sollte die Filter Membran vollständig feucht bzw. der Filter mit Flüssigkeit gefüllt sein.

Zum Druckhaltetest wird der Filter einseitig langsam mit Druck beaufschlagt und die Flüssigkeit dabei verdrängt. Die Basis der Druckhaltung besteht darin, dass aufgrund der hydrophilen Membrane bei intakter Membrane kein bemerkenswerter transmembraner Lufttransport erfolgt. Die Druckhaltung kann beispielsweise ca. 3 Minuten lang beobachtet. Werden. Innerhalb dieser Zeit sollte der Druckabfall ein vorgegebenes Limit nicht überschreiten.

Zur exakten Bestimmung ist ein Drucksensor erforderlich deren Nullpunkt und Steilheit regelmäßig verifiziert und durch unterschiedliche Rechner überwacht wird.

Mit Vorteil wird am Filtratausgang des Filters ein Sperrventil eingesetzt, welches bei Abweichung von vorgegebenen Trenddaten bzw. bei fehlerhaften Prozessdaten wie z.B. fehlerhafte Leitfähigkeit und oder Temperatur den Permeatfluss zum Anwendungsort stoppt. Dabei können zur Information für den Anwender entsprechende Anzeigeninformationen und akustische als auch optische Alarme ausgelöst werden.

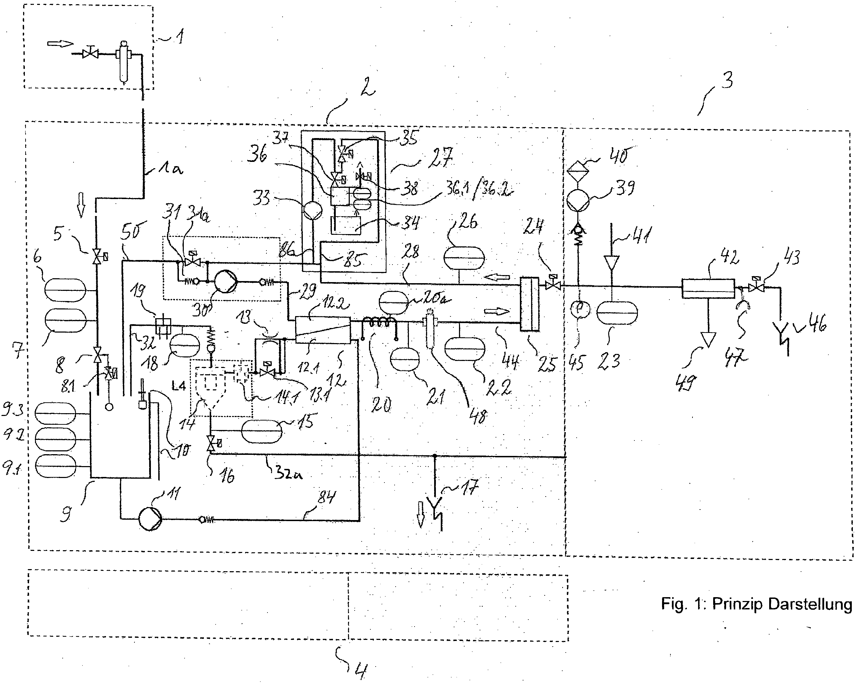

Dabei zeigt Figur 1 die prinzipielle Darstellung.

Gleichzeitig sind in der Figur 1 weitere Ausführungsbeispiele und der Hinweis auf mögliche Abweichungen und Erweiterungen dargestellt. Detailliertere Ausführungen sind in nachfolgenden Figuren ausführlicher beschrieben.

Die Flüssigkeit wird über eine optionale Vorfiltration (1) zur RO-Anlage (2) geführt. Im Eingangsbereich der RO-Anlage befinden sich ein Wassereingangsventil (5) ein Zufluss- Flussmesser (7) und eine Eingangs-Leitfähigkeitsmessung (6). Die zugeführte Flüssigkeit gelangt über ein Schwimmergeregeltes Zuflussventil (8) über den Vorlaufbehälter (9) der mit Füllstandssensoren zur Leererkennung und Füllstandsregelung (9.1, 9.2, 9.3) ausgestattet ist.

Das schwimmergeregelte Zuflussventil ist als Membran-Servoventil ausgebildet, dessen Servobohrung durch niedrigste Auftriebskräfte, also sehr kleine Schwimmervolumen, verschlossen werden kann und damit den Füllstand regelt. Darüber hinaus besteht die Möglichkeit mittels elektromagnetischen Ventils (8.1) den Servofluss zu unterbrechen, um so den Zulauf zu verhindern. Damit kann die Flüssigkeit ohne nennenswerten Strömungsverlust zum Vorlaufbehälter (9) gelangen.

Der Vorlaufbehälter beinhaltet einen Überlauf mit Detektion (10).

Die Pumpe (11) fördert die Flüssigkeit zur RO-Membran (12), wobei das Retentat über die Flussdrossel (13) mit Hochdruckbypassventil (13.1) zur Kontentratzirkulationsleitung (32) weitergeleitet wird.

Zur Aufrechterhaltung einer höheren Überströmung auf der Primärseite (12.1) wird das Retentat zurück in den Vorlaufbehälter (9) geführt.

Zur Einstellung des Wirkungsgrades ist der Abfluss-Flussmesser (15) vorgesehen, der zusammen mit dem Zufluss-Flussmesser (7) mittels der bereits oben aufgeführten Ableitung die Wirkungsgrad-Berechnung bestimmt.

Überschüssiges bzw. das aus dem Ergebnis der Wirkungsgradberechnung ermittelte Retentatvolumen wird über Abflussventil (16) zum Abfluss (17) geführt und verworfen.

Zur Verminderung der im Retentatfluss befindlichen Partikel und Keime und zur Dekontamination ist eine optionale Zentrifugalkammer (14) mit Reinigungskammer (14.1) vorgesehen. Dabei werden die Partikel im Retentat durch die Zentrifugalkraft zum Boden des Trichters geleitet, dort gesammelt und von bei geöffnetem Abflussventil (16) zum Abfluss (17) gespült. Zur Verbesserung des Ausspülvorgangs kann das Hochdruckbypassventil (13.1) kurzzeitig geöffnet werden um einen schwallartigen Ausspülvorgang zu erzielen.

Darüber hinaus kann durch eine Reinigungskammer (19) - baugleich mit Reinigungskammer 14.1-, die mittels Spannungsimpulse oder auch Magnetfeldeinflüsse auf die Flüssigkeit wirkt, eine Dekontamination bzw. Beeinflussung der schwer löslichen Calcium und Magnesium Salze so vorgenommen werden, dass eine Ablagerung derselben auf der Primärseite (12.1) der Membrane weitgehend vermieden wird.

Das erzeugte Permeat wird durch die Permeatleitfähigkeitsüberwachung (22) registriert. Alternativ kann eine zweite redundante Leitfähigkeitsmesszelle (23) mitverwendet werden.

Das durch die Leitfähigkeitsmesszelle (22) freigegebene Permeat wird durch den Ultrafilter/Sterilfilter (25) und das Permeatfreigabeventil (24) zum Filtratabfluss (49) geführt.

Die Permeatfluss erfolgt über Leitung (28) entweder über Druckhalteventil (31) und Vorlaufbehälter (9) und oder mittels Permeatzirkulationspumpe (30) über Leitung (29, 44) im Kreislauf. Dabei wird durch die Permeatzirkulation die Primärseite des Filters (25) vollständig überströmt und von Partikelrückständen befreit.

Zur Erzeugung eines Permeatdruckes wird ein Druckhalteventil (31) mit Bypassventil (31 a) verwendet. Überschüssiges Permeat gelangt über Leitung (50) zurück zum Vorlaufbehälter (9).

Eine chemothermische Desinfektion beginnt indem die Pumpe (33) zitrathaltiges Konzentrat aus Reinigungsmittelkanister (34) ansaugt. Dabei ist das Ventil (37) geöffnet, Spülventil (35) und Zwangs-Belüftungsventil (38) sind geschlossen. Belüftungsventil (38) ist stromlos offen und kann als federbelastetes Schlauchklemmventil oder auch Hubventil ausgeführt sein. Die an Glas-Schutzkammer (36) angebrachten Füllstandssensoren (36.1 und 36.2) überwachen den Ansaugvorgang und damit auch den Füllstand im Reinigungsmittelkanister (34).

Bei laufender Pumpe (30) wird das Desinfektions-/Reinigungsmittel bis zum Erreichen einer vorbestimmten Leitfähigkeit zirkuliert. Dabei kann die Leitfähigkeitskonzentration über die Messeinrichtung (22) überwacht werden. Es versteht sich, dass zur Aufnahme der zusätzlichen Flüssigkeit Ventile hin zum Abfluss (43) oder hin zum Vorlaufbehälter (31a) kurzzeitig zu öffnen sind. Mittels Heizung (20) und Regelungssensor (21) wird die Flüssigkeit auf die gewünschte und voreingestellte Temperatur aufgeheizt. Dabei ist wahlweise eine chemothermische Desinfektion des gesamten hochreinen Sekundärbereiches (44, 28, 29) bis zum Permeatabfluss (46) möglich. Die Umkehrosmosemembrane wird dabei über die Anschlüsse (29, 44) im hochreinen Bereich insgesamt hindurch gereinigt und desinfiziert.

Bei Bedarf kann über das geöffnete Bypassventil (31a) erhitzte Flüssigkeit zum Primärkreis geführt werden, um die erforderliche Temperatur zu erreichen. Sobald Reinigungslösung mittels Desinfektionseinrichtung (27) über Vorlaufbehälter (9) in den Primärkreis (12.1) der Membran geführt wird, unterbricht der transmembrane Fluss. Pumpe (11) zirkuliert den Primärkreis (84, 12.1, 32, 9) und reinigt bzw. desinfiziert dabei die gesamten flüssigkeitsführenden Komponenten in diesem Kreis. Nach Abschluss der chemothermischen Desinfektion kann ein Freispülvorgang eingeleitet werden, bis Leitfähigkeitszelle (22) respektive (23) Desinfektionsmittelfreiheit melden.

Während des Freispülvorgangs wird Spülventil (35) geöffnet um auch die komplette desinfektionshaltige Leitung der Desinfektionseinheit (27) frei zu spülen.

Um eine nachfolgende unbeabsichtigte Zuführung von Desinfektionsmittel in den Permeatkreislauf (28) zu vermeiden wird Belüftungsventil (38) geöffnet und die Niveaus in Kammer (36) überwacht. Somit ist eine sichere Vermeidung einer unbeabsichtigten Desinfektion gewährleistet.

Um die Integrität des Filters (25) oder auch (42) bzw. dessen Membran zu überwachen, wird zu festgelegten Betriebszeiten mittels Luftpumpe (39) mit optionalen Luftansaugfilter (40) die Flüssigkeit sekundärseitig am Filter 25 und primärseitig am Filter 42 verdrängt. Bedingt durch den hydrophilen Charakter der Membrane wird dadurch eine Druckhaltung erzielt und mittels Drucksensor (45) überwacht bzw. registriert.

(4) zeigt nur andeutungs- und beispielsweise die Elektronik die als Betriebs- und Schutzsystem ausgeführt ist. Ebenso ist eine mögliche Erweiterung in Figur 1 dahingehend dargestellt als dass durch Zudosiereinrichtung (41) beispielsweise ein Konzentrat zur Herstellung einer voll gebrauchsfähigen, vor Ort erstellten Spüllösung zu dosiert wird, wobei diese Spüllösung mittels Filter (42) vor Gebrauch zusätzlich steril filtriert werden könnte.

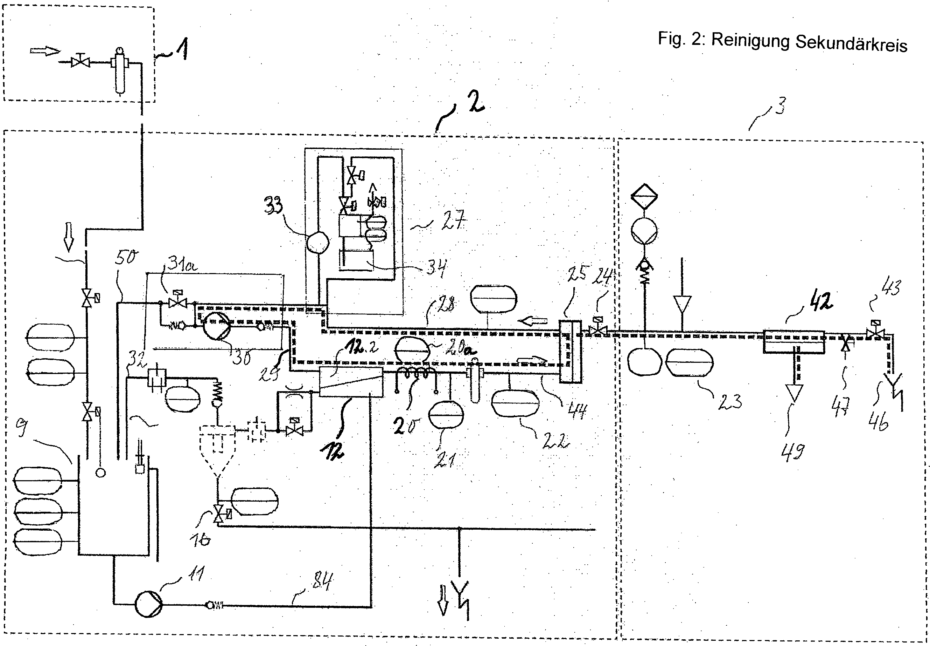

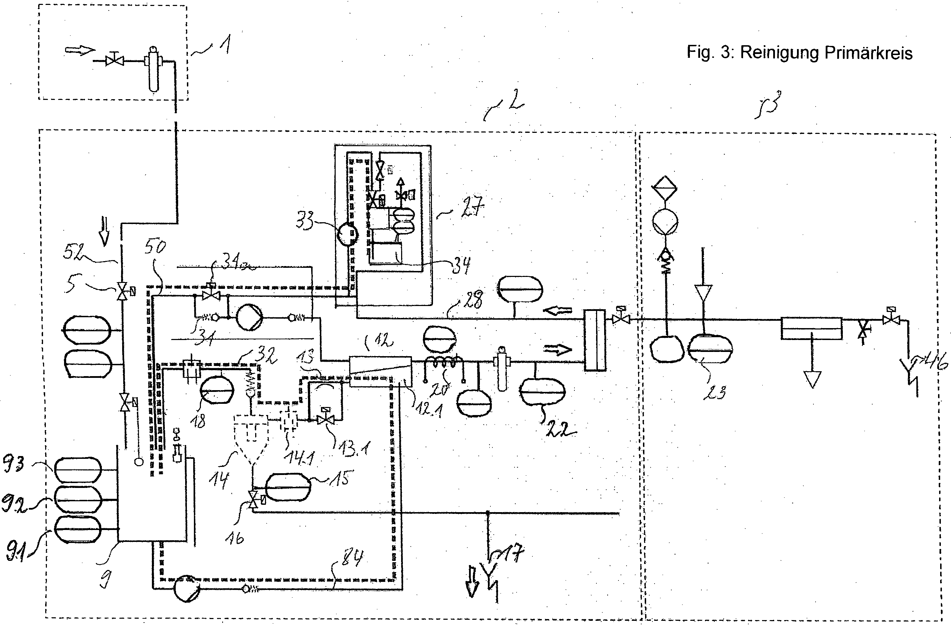

Zur Erläuterung der Reinigungsvorgänge wurden Figur 2 und 3 beigefügt.

Figur 2 zeigt anhand des gestrichelten Verlaufes den Reinigungsvorgang des hochreinen Bereiches (44, 28, 29, 12.2). Vorteilhaft kann während dieses Reinigungsvorgangs die Hochdruckpumpe (11) zugeschaltet werden. Mittels der Desinfektions- und Reinigungseinheit (27) wird der Kreislauf bis zur Erreichung einer vordefinierten Leitfähigkeit mit Reinigungsmittel gefüllt. Dabei können während der Aufkonzentration Ventile (24,43) kurzzeitig geöffnet werden.

Die Permeat Zirkulationspumpe (30) überströmt den Kreislauf so, dass gleichzeitig mittels Heizung (20) Desinfektionsmittelflüssigkeit auf eine vordefinierte Temperatur erhitzt wird.

Die erhitzte Desinfektionsmittelflüssigkeit kann über den optionalen Sterilfilter (42) zum Permeatabfluss (46) abgeleitet werden um auch diese Strecke zu desinfizieren.

Figur 3 zeigt dabei die Heißdesinfektion des Primärkreises (84, 12.1, 32). Zunächst wird dabei mittels Heizung (20) heißes Permeat in den Primärkreis (84, 12.1, 32) geführt. Während dieses Zyklus kann die kalte Flüssigkeit über Ventil 16 zum Abfluss geführt werden. Im Anschluss wird durch Zuschalten der Desinfektionsmitteleinheit (27) und Förderung der Pumpe (33) Desinfektionsmittel über das geöffnete Bypassventil (31a) zum Vorlaufbehälter geführt, um den Primärkreis aufzukonzentrieren.

Vorteilhafterweise wird vorher das Niveau des Vorlaufbehälters beispielsweise von 9.3 auf 9.2 abgesenkt, um ein definiertes Desinfektionsmittelvolumen zuzuführen. Da die Membran (12) aufgrund des umgekehrten osmotischen Druckes undurchlässig für das Desinfektionsmittel ist, wird bei diesem Vorgang der hochreine Primärkreis nicht kontaminiert.

Für die Dauer der Desinfektion wird das Hochdruckbypassventil (13.1) geöffnet um einen möglichst niedrigen Transmembrandruck zu erhalten. Abflussventil (16) bleibt für die Dauer der Heißreinigung geschlossen.

Der Ausspülvorgang erfolgt durch das Abschalten der Desinfektionsmittelzufuhr bzw. vorteilhafterweise sowohl für die Primärseite als auch für die Sekundärseite in zwei Schritten. Zunächst wird durch Zuführung von Frischwasser über Ventil (5), desinfektionsmittelhaltige Lösung zum Abfluss (17 bzw. 46) geführt, bis Leitfähigkeitsmessung (22 respektive 23) einen vorbestimmten Wert erreichen. Nach einer kurzen Stillstands Phase die dem herausdiffundieren desinfektionshaltiger Lösung aus schlecht durchströmten Bereichen dient, wird ein zweiter Ausspülvorgang ebenfalls bis zum Erreichen der vorgegebenen Leitfähigkeits-Grenzwerte absolviert.

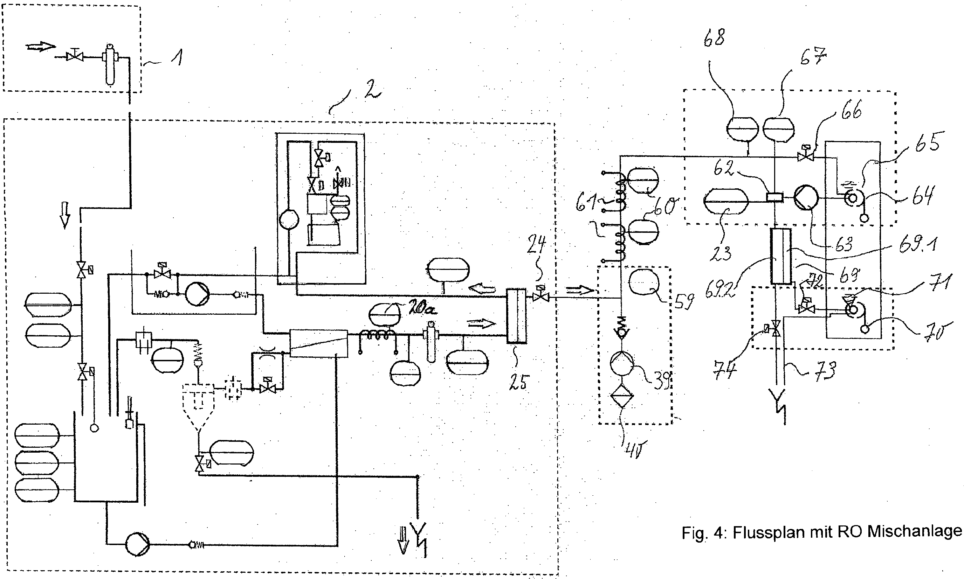

Figur 4 zeigt etwas detaillierter die bereits in Fig. 1 aufgeführte schematische Darstellung einer Mischanlage. Freigegebenes Permeat fließt durch das Permeatfreigabeventil (24) zu einer weiteren Heizer- und Temperaturregeleinrichtung (59, 60, 61 ,68), und wird dabei beispielsweise auf Körpertemperatur erwärmt, wobei die Sensoren (60, 20a) als Bimetallsensoren gegenüber Temperaturschutz ausgebildet sein können.

In Mischkammer (62) wird das Permeat mit einem nicht dargestellten Konzentrat, welches über die Konzentratpumpe (63) zudosiert wird, homogenisiert. Das Konzentrat kann bei geöffneter Klappe (64) an Konzentratbeutelkonnektor (65) angeschlossen werden.

Die fertige Spüllösung kann mittels Leitfähigkeitsmesszelle (23) überwacht werden, und fließt über Sterilflter (69) und Spüllösungsfreigabeventil (72) zum Spüllösungskonnektor (71). Bei geöffneter Spüllösungsklappe (70) wird über eine geeignete Verbindungstechnik ein nicht dargestellter Spüllösungsbehälter angeschlossen. Die weiteren Ventile (66, 74) sind für Spülzwecke des jeweiligen Konzentratkonnektors (64, 65) bzw. des Filters (69) und der Spüllösungsklappe (70 und 71) vorgesehen.

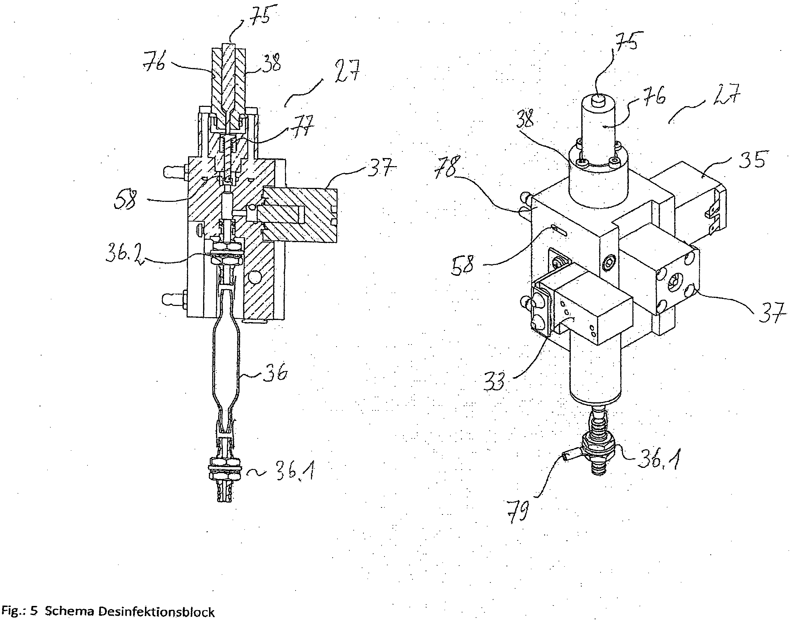

Figur 5 zeigt den Aufbau der Desinfektions- und Reinigungseinheit (27) deren Funktion bereits in Fig. 1 erläutert wurde.

Die Kammer mit Schutzvorrichtung (36) ist dargestellt als Glasküvette (36) mit ihren tüllenförmigen Elektroden (36.1 und 36.2), über die der Füllstand in der Küvette überwacht werden kann. Kabelanschluss (79) zeigt dabei einen möglichen elektronischen Anschluss an die Elektroden 36.1 und 36.2.

Ventil (38) ist als federbelastetes Hubmagnetventil ausgeführt, wobei im stromlosen Zustand die Rückholfeder (77) den Magnetplunger (75) nach oben drückt und damit die Belüftung (58) der Desinfektionskammer (36) freigibt. Stellvertretend für das hier dargestellte Magnetventil (38) ist auch ein Schlauchklemmventil vorstell- und einsetzbar.

Zur Veranschaulichung der kompakten Bauweise zeigt der prismatische Desinfektionsmittelblock (78) die Aufnahme der Reinigungspumpe (33), hier stellvertretend dargestellt als Membranpumpe, wobei alternativ auch eine Schlauchpumpe eingesetzt werden kann. Zur Minimierung der Baugröße sind alle Anschlüsse der Desinfektions- und Reinigungseinheit (27) an und in diesem Block (78) angebracht.

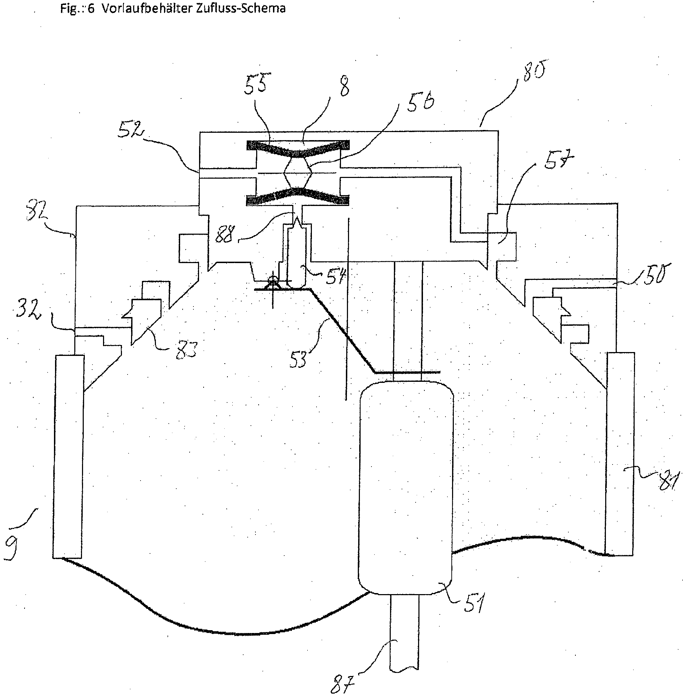

Fig.6 ist eine schematische Darstellung der kontinuierlichen, beruhigten Flüssigkeitszuführung in den Vorlaufbehälter (9).

Dabei wird der Rohwasserzufluss (52) bei abgesenktem Schwimmer (51) durch die aufgedrückte, v-förmige Membran (55) in den Ringspalt (57) gefördert. Durch die Geometrie des ringspaltförmigen Rohwasserzufluss (57) wird eine gleichmäßige, nicht turbulente Flüssigkeitszufuhr in den Vorlaufbehälter erreicht. Schwimmer (51) regelt dabei mittels Schwimmerhebel (53), der zur Kräfteübertragung seinen Drehpunkt nahe der Servobohrung (88) hat, und dem Servobohrungs-Stück (54), den Rohwasserzufluss.

Nicht dargestellt sind die im Schwimmerrohr (87) eingebauten Niveausensoren (9.1, 9.2, 9.3) zur Füllstandsregelung und -meldung und das elektrische Ventil zur Abschaltung des Servoflusses 8.1.

Ebenso nicht dargestellt ist der in Fig.1 beschriebene Überlauf mit Detektion (10).

Der Vorlaufbehälter ist im Zuflussbereich dreiteilig und besteht dabei aus dem Vorlaufbehälter-Kopf in dem das Wasserzuflussventil (8) mit seinen Servobohrungen eingebracht ist, dem Deckel mit dem eingeclipsten ringförmigen Rücklauf-Ringspalt (83) für Permeat- und Konzentratzulaufleitung, dem Vorlaufbehälter-Rohr (81) und einem nicht dargestellten Bodenverschlussstück.

**Legende**

| | |
|---|---|
| 1. | Vorfiltration |
| 2. | RO-Anlage |
| 3. | Sterilfilter Erweiterung |
| 4. | Redundante Elektronik |
| 5. | Wassereingangsventil |
| 6. | Eingangs-Leitfähigkeitsmessung |
| 7. | Zufluss- Flussmesser, |
| 8. | Schwimmergeregeltes Zuflussventil (mit elektrischer Abschaltung-Option, 8.1) |
| 9. | Vorlaufbehälter mit Sensoren zur Leererkennung und Füllstandsregelung (9.1, 9.2, 9.3) |
| 10. | Überlauf mit Detektion |
| 11. | Hochdruck-Pumpe |
| 12. | RO-Membran, 12.1 Primärseite, 12.2 Sekundärseite |
| 13. | Flussdrossel mit Hochdruck-Bypassventil 13.1, |
| 14. | Optionale Zentrifugalkammer/ 14.1 Optionale Reinigungskammer |
| 15. | Abfluss-Flussmesser |
| 16. | Abflussventil |
| 17. | Abfluss |
| 18. | Optionaler Temperatursensor |
| 19. | Reinigungskammer |
| 20. | Optionale Heizung mit Regeltemperatursensor 20a |

(fortgesetzt)

| 21. | Temperaturregler |
|---|---|
| 22. | Leitfähigkeitsmesszelle, Permeatleitfähigkeitsüberwachung mit Temperatursensor |
| 23. | Redundante Leitfähigkeitsmesszelle und Temperaturanzeige |
| 24. | Permeatfreigabeventil |
| 25. | Permeat Ultra-/Sterilfilter |
| 26. | Optionaler Flussmesser |
| 27. | Desinfektions- und Reinigungseinheit |
| 28. | Permeatzirkulationsleitung |
| 29. | Permeat Zirkulationsleitung |
| 30. | Permeat Zirkulationspumpe |
| 31. | Druckhalteventil mit Bypass (31a) |
| 32. | Konzentratzirkulationsleitung |
| 33. | Reinigungsmittelpumpe |
| 34. | Reinigungsmittelkanister |
| 35. | Spülventil |
| 36. | Kammer mit Schutzvorrichtung gegen unbeabsichtigte Desinfektion mit zwei Niveausensoren 36.1/36.2 |
| 37. | Freigabeventil Desinfektion |
| 38. | Belüftungsventil |
| 39. | Luftdruckzuführung, Luftpumpe |
| 40. | Luftfilter |
| 41. | Zudosiereinrichtung für Konzentrat/ Spüllösungsmittel |
| 42. | Optionaler Sterilfilter |
| 43. | Abflussventil |
| 44. | Permeatvorlaufleitung |
| 45. | Drucksensor |
| 46. | Permeatabfluss |
| 47. | Probeentnahmeventil |
| 48. | Nachfiltration |
| 49. | Filtratabfluss/ Verbraucher |
| 50. | Permeatrücklauf |
| 51. | Schwimmer |
| 52. | Rohwasserzufluss |
| 53. | Schwimmerhebel |
| 54. | Servobohrungverschluss-Stück |
| 55. | Schlauchförmige Ventil-Formmembran |
| 56. | V-förmige Sperre |
| 57. | Ringspaltförmiger Rohwasserzufluss |
| 58. | Belüftung Desinfektionskammer |
| 59. | Eingang Temperatursensor |

| 60. | Sicherheitstemperaturbegrenzer |
|---|---|
| 61. | Heizer Nr.2 |
| 62. | Mischkammer |
| 63. | Konzentratpumpe |
| 64. | Konzentratklappe |
| 65. | Konzentratbeutelkonnektor mit Überwachung |
| 66. | Konzentratklappenspülventil |
| 67. | Drucksensor |
| 68. | Temperaturregler |
| 69. | Sterilfilter 69.1 Filtratseite 69.2 Primärseite |
| 70. | Spüllösungsklappe |
| 71. | Spüllösungskonnektor mit Überwachung |
| 72. | Spüllösungsfreigabeventil |
| 73. | Spüllösungsabfluss |
| 74. | Spüllösungsbypassventil |
| 75. | Magnetpfunger |
| 76. | Spule |
| 77. | Rückholfeder |
| 78. | Desinfektionsblock |
| 79. | Kabelanschluss |
| 80. | Vorlaufbehälter Kopf |
| 81. | Vorlaufbehälter Rohr |
| 82. | Vorlaufbehälter Deckel |
| 83. | Vorlaufbehälter Permeat Rücklauf-Ringspalt |
| 84. | Hochdruckleitung |
| 85. | Spülanschluss |
| 86. | Desinfektionsmittelzufuhr |
| 87. | Schwimmerrohr |
| 88. | Servobohrung |
| 89. | |

**Patentansprüche**

1. Verfahren zur Verifizierung einer RO-Membran einer RO-Anlage,
   **dadurch gekennzeichnet,**
   **dass** die Leitfähigkeitswerte des zugeführten Rohwassers und des Permeats sowie die Menge des Rohwasser-Zuflusses und des Konzentrat-Abflusses kontinuierlich oder zyklisch gemessen werden und
   **dass** aus den Messwerten der Wirkungsgrad der RO-Membran und deren Rückhalterate und/oder Filtrationseffizienz errechnet werden.

2. RO-Anlage zur Durchführung des Verfahrens nach Anspruch 1, mit einer Rohwasser-Zuflussleitung (1a), die zu einem Vorlaufbehälter (9) führt, von dem eine Leitung (84) mit einer Pumpe (11) zu der Primärseite (12.1) einer RO-Membran (12) führt, von wo eine Konzentratzirkulationsleitung (32) zurück zu dem Vorlaufbehälter (9) führt, und mit einer Permeatvorlaufleitung (44) und einer ersten Permeatzirkulations-leitung (28), die entweder zu einer Permeatrücklaufleitung (50) verläuft, die zu dem Vorlaufbehälter (9) führt, oder über eine weitere Permeatzirkulations-leitung (29) in die Sekundärseite (12.2) der RO-Membran einmündet, und mit einer Filtratabflussleitung, die zu einem Filtratabfluss (49) führt,
**dadurch gekennzeichnet,**
**dass** in der Rohwasser-Zuflussleitung (1 a) ein Zufluss-Flussmesser (7) und in einer Konzentrat-Abflussleitung (32a) ein Abfluss-Flussmesser (15) angeordnet sind, die durch zugehörige unabhängige Rechner überwacht und deren Messwerte zur Bestimmung des Wirkungsgrads der RO-Membran (12) ausgewertet werden.

3.  RO-Anlage nach Anspruch 2,
    **dadurch gekennzeichnet,**
    **dass** die Rohwasser-Zuflussleitung (1a) in einen Ringspalt (57) des Vorlaufbehälters (9) einmündet, durch den eine gleichmäßige, nicht turbulente Wasserzufuhr in den Vorlaufbehälter (9) erfolgt, die eine exakte volumetrische Messung der Zu- und Abflüsse ermöglicht.

4.  RO-Anlage nach den Ansprüchen 2 und 3,
    **dadurch gekennzeichnet,**
    **dass** in der Rohwasser-Zuflussleitung (1a) eine Eingangsleitfähigkeits-Messzelle (6) und in der Permeatvorlaufleitung (44) eine Permeatleitfähigkeits-Messzelle (22) angeordnet sind, deren Werte von zugehörigen Rechnern gemessen und zur Bestimmung der Rückhalterate der RO-Membran (9) ausgewertet werden.

5.  RO-Anlage nach einem der Ansprüche 2 bis 4,
    **dadurch gekennzeichnet,**
    **dass** die Permeatvorlaufleitung (44) zu einem Filter, vorzugsweise einem Ultra-/Sterilfilter (25) führt, von dessen Primärseite die erste Permeatzirkulationsleitung (28) abgeht und von dessen Sekundärseite die Filtratabflussleitung ausgeht, und
    **dass** am Filtratausgang des Filters (25) ein Sperrventil (24) eingesetzt ist, das bei fehlerhaften Prozessdaten wie z.B. fehlerhafter Leitfähigkeit oder Temperatur den Filtratabfluss stoppt.

Fig. 1: Prinzip Darstellung

Fig. 2: Reinigung Sekundärkreis

Fig. 3: Reinigung Primärkreis

Fig. 4: Flussplan mit RO Mischanlage

Fig.: 5  Schema Desinfektionsblock

Fig.: 6  Vorlaufbehälter Zufluss-Schema

**Europäisches Patentamt**
**European Patent Office**
**Office européen des brevets**

# EUROPÄISCHER RECHERCHENBERICHT

**Nummer der Anmeldung**

EP 15 00 3317

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2005/077335 A1 (BAXTER INT [US]; BAXTER HEALTHCARE SA [CH]; KELLY THOMAS [US]) 25. August 2005 (2005-08-25) * Anspruch 2 * * Seite 2, Zeile 22 - Zeile 25 * * Anspruch 9 * * Seite 13, Zeile 6 - Zeile 9 * * Abbildung 1 * * Seite 7, Zeile 29 - Zeile 32 * ----- | 1-5 | INV. B01D61/02 B01D61/14 B01D61/12 C02F1/44 |
| Y | EP 2 689 790 A1 (VOELKER MANFRED [DE]) 29. Januar 2014 (2014-01-29) * Anspruch 1 * * Absatz [0001] * * Absatz [0021] * * Abbildung 1 * * Absatz [0019] * ----- | 2,4,5 | |
| Y | US 2011/257788 A1 (WIEMERS REGINALD A [US] ET AL) 20. Oktober 2011 (2011-10-20) * Absatz [0131] * * Absatz [0395] - Absatz [0396] * ----- | 1 | |
| Y | US 2009/163348 A1 (DA COSTA ANDRE R [US] ET AL) 25. Juni 2009 (2009-06-25) * Absatz [0023] * ----- | 1 | RECHERCHIERTE SACHGEBIETE (IPC) C02F B01D |
| Y | CA 1 052 538 A (TELLUSOND AB) 17. April 1979 (1979-04-17) * Anspruch 1 * ----- | 3 | |
| A | DE 195 38 818 A1 (DWA DIALYSE WASSER AUFBEREITUN [DE]) 24. April 1997 (1997-04-24) * das ganze Dokument * ----- -/-- | 1-5 | |

Der vorliegende Recherchenbericht wurde für alle Patentansprüche erstellt

| Recherchenort | Abschlußdatum der Recherche | Prüfer |
|---|---|---|
| München | 12. Juli 2016 | Hoyer, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................................

& : Mitglied der gleichen Patentfamilie, übereinstimmendes Dokument

EPO FORM 1503 03.82 (P04C03)

**Europäisches Patentamt**
**European Patent Office**
**Office européen des brevets**

# EUROPÄISCHER RECHERCHENBERICHT

Nummer der Anmeldung

EP 15 00 3317

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2010 048616 A1 (VOELKER MANFRED [DE]) 1. März 2012 (2012-03-01) * das ganze Dokument * ----- | 1-5 | |
| A | DE 10 2011 102662 A1 (VOELKER MANFRED [DE]) 29. November 2012 (2012-11-29) * das ganze Dokument * ----- | 1-5 | |
| A | DE 10 2012 001879 A1 (VOELKER MANFRED [DE]) 1. August 2013 (2013-08-01) * das ganze Dokument * ----- | 1-5 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 12. Juli 2016 | Hoyer, Michael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 00 3317

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2016

| Im Recherchenbericht angeführtes Patentdokument | Datum der Veröffentlichung | Mitglied(er) der Patentfamilie | Datum der Veröffentlichung |
|---|---|---|---|
| WO 2005077335 A1 | 25-08-2005 | US 2005171501 A1<br>WO 2005077335 A1 | 04-08-2005<br>25-08-2005 |
| EP 2689790 A1 | 29-01-2014 | BR 102012032457 A2<br>CN 103566758 A<br>EP 2689790 A1<br>ES 2536239 T3<br>RU 2012136721 A<br>US 2014027379 A1 | 16-12-2014<br>12-02-2014<br>29-01-2014<br>21-05-2015<br>10-03-2014<br>30-01-2014 |
| US 2011257788 A1 | 20-10-2011 | US 2011257788 A1<br>US 2014332450 A1<br>US 2015034495 A1 | 20-10-2011<br>13-11-2014<br>05-02-2015 |
| US 2009163348 A1 | 25-06-2009 | KEINE | |
| CA 1052538 A | 17-04-1979 | KEINE | |
| DE 19538818 A1 | 24-04-1997 | KEINE | |
| DE 102010048616 A1 | 01-03-2012 | BR PI1104058 A2<br>CN 102381799 A<br>DE 102010048616 A1<br>EP 2423169 A1<br>EP 2835358 A1<br>RU 2011135436 A<br>US 2012048790 A1 | 22-01-2013<br>21-03-2012<br>01-03-2012<br>29-02-2012<br>11-02-2015<br>27-02-2013<br>01-03-2012 |
| DE 102011102662 A1 | 29-11-2012 | AU 2012202387 A1<br>CA 2775542 A1<br>CN 102794108 A<br>DE 102011102662 A1<br>EP 2527303 A1<br>EP 2865651 A1<br>ES 2542081 T3<br>US 2012298569 A1 | 13-12-2012<br>27-11-2012<br>28-11-2012<br>29-11-2012<br>28-11-2012<br>29-04-2015<br>30-07-2015<br>29-11-2012 |
| DE 102012001879 A1 | 01-08-2013 | DE 102012001879 A1<br>EP 2623188 A1<br>ES 2527201 T3 | 01-08-2013<br>07-08-2013<br>21-01-2015 |

EPO FORM P0461

Für nähere Einzelheiten zu diesem Anhang : siehe Amtsblatt des Europäischen Patentamts, Nr.12/82